# EUROPEAN PATENT APPLICATION

(11) **EP 4 800 784 A1**
(43) Date of publication of application: **02.09.2026**
(21) Application number: 24882536.6
(22) Date of filing: 02.01.2024
(51) Int. Cl.: H01M 10/04, B21D 22/04, B21D 28/06

(54) **APPARATUS FOR MANUFACTURING SECONDARY BATTERY CASE**

(30) Priority: 26.10.2023 KR 20230144718
(71) Applicant: SAMSUNG SDI CO., LTD., Yongin-si, Gyeonggi-do 17084 (KR)
(72) Inventor: JANG, Young Jin, Suwon-si Gyeonggi-do 16678 (KR); CHOI, Jung Hun, Suwon-si Gyeonggi-do 16678 (KR)
(74) Representative: Gulde & Partner
(86) International application number: PCT/KR2024/000011
(87) International publication number: WO 2025/089504

(57) **Abstract**

The present disclosure relates to a secondary battery case manufacturing device, and provides a secondary battery case manufacturing device capable of simultaneously performing a case molding process and an imprinting process. To this end, the secondary battery case manufacturing device includes a die having a first surface and a second surface that are opposite to each other, a punch hole formed through the first surface and the second surface, a punch disposed to face the first surface and configured to press a workpiece toward the punch hole in a first direction, a knockout member disposed to face the second surface and configured to press the workpiece in a second direction opposite to the first direction, and a stamp member installed on the knockout member and configured to imprint a pattern on the workpiece as the knockout member comes into contact with the workpiece.

## Description

### [Technical Field]

The present disclosure relates to a secondary battery case manufacturing device.

### [Background Art]

In general, with the recent rapid spread of electronic devices using batteries, such as mobile phones, laptop computers, electric vehicles, and the like, the demand for secondary batteries with high energy density and high capacity is rapidly increasing. Accordingly, research and development to improve the performance of lithium secondary batteries is actively underway.

A lithium secondary battery is a battery including a positive electrode and a negative electrode containing an active material capable of intercalation and deintercalation of lithium ions, and an electrolyte, and produces electrical energy through oxidation and reduction reactions when lithium ions are intercalated/deintercalated into/from the positive electrode and the negative electrode.

A case of the secondary battery may be manufactured by molding a sheet-shaped slug into a square or circular can using an extrusion method and an ironing method.

The aforementioned information disclosed in this background section is merely for enhancement of understanding of the background technology of the present disclosure, and therefore may contain information that does not constitute the related art.

### [Disclosure]

### [Technical Problem]

The present disclosure is directed to providing a secondary battery case manufacturing device capable of simultaneously performing a case molding process and an imprinting process.

However, the technical problems to be solved by the present invention are not limited to the problems described above, and other problems not mentioned can be clearly understood by those skilled in the art from the explanation of the invention described below.

### [Technical Solution]

To solve the above technical problem, a secondary battery case manufacturing device according to an embodiment of the present invention includes a die having a first surface and a second surface that are opposite to each other, a punch hole formed through the first surface and the second surface, a punch disposed to face the first surface and configured to press a workpiece toward the punch hole in a first direction, a knockout member disposed to face the second surface and configured to press the workpiece in a second direction opposite to the first direction, and a stamp member installed on the knockout member and configured to imprint a pattern on the workpiece as the knockout member comes into contact with the workpiece.

The knockout member may include a knockout body disposed to face the second surface and configured to move along the first direction or the second direction and a knockout pad installed to be reciprocally movable with respect to the knockout body along the first direction and the second direction and configured to contact the workpiece, and the stamp member may selectively contact the workpiece according to the moving direction of the knockout pad.

The knockout pad may be inserted into the punch hole as the knockout body is moved along the second direction.

The stamp member may include a stamp hole formed through the knockout pad and disposed to face the punch hole, a stamp rod extending from the knockout body toward the stamp hole, and a stamp extending from the stamp rod and disposed inside the stamp hole, and the stamp may protrude out of the stamp hole as the knockout pad is moved relative to the knockout body in the first direction.

The stamp may extend along the second direction from an end of the stamp rod.

The stamp member may further include a support member disposed between the knockout body and the stamp rod and configured to support the stamp rod with respect to the knockout body.

The support member may be provided to be elastically deformable.

The knockout member may further include an elastic member configured to press the knockout pad in the second direction and a stopper configured to prevent the knockout pad from being separated from the knockout body.

The elastic member may be a coil spring.

The elastic member may be disposed between the knockout body and the knockout pad.

The elastic member may be disposed so that a longitudinal direction thereof is parallel to the first direction, and both ends thereof may be fixed to the knockout body and the knockout pad, respectively.

The stopper may include a first stopper extending from the knockout body and a second stopper extending from the knockout pad and contacting the first stopper as the knockout pad is moved relative to the knockout body in the second direction.

The first stopper may include a first stopper body fixed to the knockout body and a first hook extending from the first stopper body along a direction intersecting the first direction and having a first contact surface, the second stopper may include a second stopper body fixed to the knockout pad and a second hook extending from the second stopper body in a direction opposite to the extension direction of the first hook and having a second contact surface disposed to face the first hook, and the first hook and the second hook may be sequentially disposed along the first direction.

The first contact surface and the second contact surface may be disposed in parallel.

The stamp may protrude out of the stamp hole as the knockout pad is moved with respect to the knockout body from an initial position by a first set distance in the first direction.

The second stopper may contact the knockout body as the knockout pad is moved with respect to the knockout body from the initial position by a second set distance greater than the first set distance in the first direction.

The knockout member may further include a guide member configured to guide the relative movement of the knockout pad with respect to the knockout body.

The guide member may include a guide hole formed through any one of the knockout body and the knockout pad and a guide rod extending from the other one of the knockout body and the knockout pad and inserted into the guide hole.

The guide hole and the guide rod may be disposed parallel to the first direction.

### [Advantageous Effects]

According to an embodiment of the present disclosure, a case molding process and an imprinting process can be simultaneously performed by a knockout member and a stamp member, making it possible to produce secondary battery cases at high speed.

According to an embodiment of the present disclosure, a stamp selectively protrudes from a stamp hole according to a moving direction of a knockout pad, so damage to a workpiece and the stamp due to a collision between the workpiece and the stamp in a process of transferring the workpiece can be prevented, and deterioration of imprinting performance due to damage to the stamp can be prevented.

According to an embodiment of the present disclosure, the stamp protrudes from the stamp hole only when a pattern is imprinted on the workpiece, so wear of the stamp due to constant exposure of the stamp can be prevented, and damage to the stamp due to a collision between a punch and the stamp can be prevented during a punching operation with the punch.

### [Description of Drawings]

The drawings attached to this specification illustrate some embodiments of the present disclosure, and further describe aspects and features of the present disclosure together with the detailed description of the present disclosure. However, the present disclosure should not be construed as being limited to the drawings:
FIG. 1 is a perspective view schematically illustrating a configuration of a secondary battery case manufacturing device according to one embodiment of the present disclosure;
FIG. 2 is an exploded perspective view schematically illustrating the configuration of the secondary battery case manufacturing device according to one embodiment of the present disclosure;
FIG. 3 is an exploded perspective view illustrating the configuration of the secondary battery case manufacturing device according to one embodiment of the present disclosure from a viewpoint different from FIG. 3;
FIG. 4 is a cross-sectional view schematically illustrating the configuration of the secondary battery case manufacturing device according to one embodiment of the present disclosure;
FIG. 5 is an exploded perspective view schematically illustrating a configuration of a knockout member and a stamp member according to one embodiment of the present disclosure;
FIG. 6 is an exploded perspective view illustrating the configuration of the knockout member and the stamp member according to one embodiment of the present disclosure from a viewpoint different from FIG. 5;
FIG. 7 is a cross-sectional view schematically illustrating the configuration of the knockout member and the stamp member according to one embodiment of the present disclosure;
FIG. 8 is an enlarged view schematically illustrating a configuration of a stopper according to one embodiment of the present disclosure;
FIG. 9 is an enlarged view schematically illustrating a configuration of a stamp according to one embodiment of the present disclosure; and
FIGS. 10 to 15 are views schematically illustrating an operation process of a secondary battery case manufacturing device according to one embodiment of the present disclosure.

### [Modes of the Invention]

Preferred embodiments of the present invention are explained in detail by referring to the attached drawing below. Prior to this, terms or words used in this specification and the scope of the claim shall not be interpreted in a conventional or dictionary sense, and the inventor must be interpreted with a meaning and concept in line with the technical ideas of the present invention based on the principle that the concept of terms can be appropriately defined in order to explain his own invention in the best way. Therefore, since the embodiments described in this specification and the configurations shown in the drawing are only some of the most desirable embodiments of the present invention and do not represent all of the technical ideas of the present invention, it is important to understand that there may be various equalities and variants that can replace them at the time of this application.

Also, when used in this specification, "include (include)" and/or "include (include)" specify the presence of the mentioned shapes, numbers, steps, actions, parts, elements, and/or groups of these, and does not exclude the presence or addition of one or more other shapes, numbers, actions, elements and/or groups.

Also, in order to facilitate understanding of the invention, the attached drawing may not be shown according to the actual scale, but the dimensions of some components may be exaggerated. Also, the same reference number can be assigned to the same component in different embodiments.

The statement that the two comparison targets are "the same" means that they are "substantially the same." Therefore, actual equality may include deviations that are considered to be low in the industry, for example, cases with deviations within 5%. Also, when a parameter is uniform in a given area, it can mean that it is uniform from an average point of view.

Although first, second, etc. are used to describe various components, of course, these components are not limited by these terms. These terms are used only to distinguish one component from another; of course, the first component may be the second component unless there is a particularly opposite description.

Throughout the specification, each component may be singular or plural, unless specifically stated to the contrary.

The placement of any configuration "above (or below)" of a component or "above (or below)" of a component may mean that any configuration is not only arranged in contact with the top (or bottom) of the component, but also that other configurations may be interposed between the component and any configuration arranged on (or below) the component.

Also, when it is described that a component is "connected", "connected", or "connected" to another component, the components may be directly connected or tangential to each other, but it should be understood that other components are "interposed" between each component, and that each component may also be "connected", "connected", or "connected" through other components. Also, when a part is electrically connected (electrically connected) to another part, this includes not only cases where it is directly connected, but also cases where other devices are connected in between.

Expressions, such as "at least one of" and "any one of," when preceding a list of elements, modify the entire list of elements and do not modify the individual elements of the list.

When "A and/or B" is used throughout the specification, this means A, B, or A and B, unless otherwise stated otherwise. In other words, "and/or" includes all or any combination of the multiple items listed. When "C to D," this means C or higher and D or less, unless otherwise stated otherwise.

When phrases such as "at least one of A, B and C, "at least one of A, B or C," "at least one selected from a group of A, B and C," or "at least one selected from among A, B and C" are used to designate a list of elements A, B and C, the phrase may refer to any and all suitable combinations or a subset of A, B and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It will be understood that, although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (rotated 90 degrees or at other orientations), and the spatially relative descriptors used herein should be interpreted accordingly.

The terms used in this specification are intended to describe embodiments of this disclosure and are not intended to limit this disclosure.

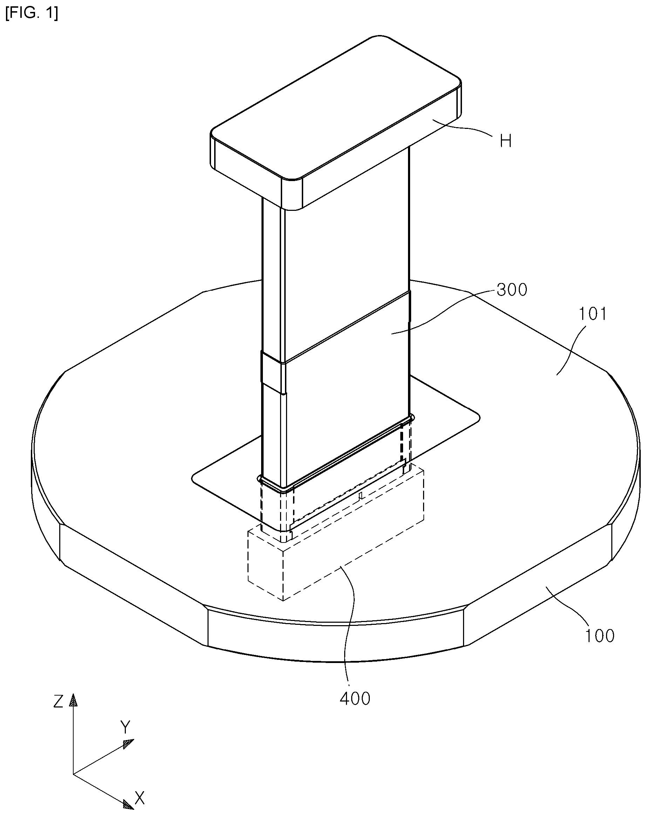

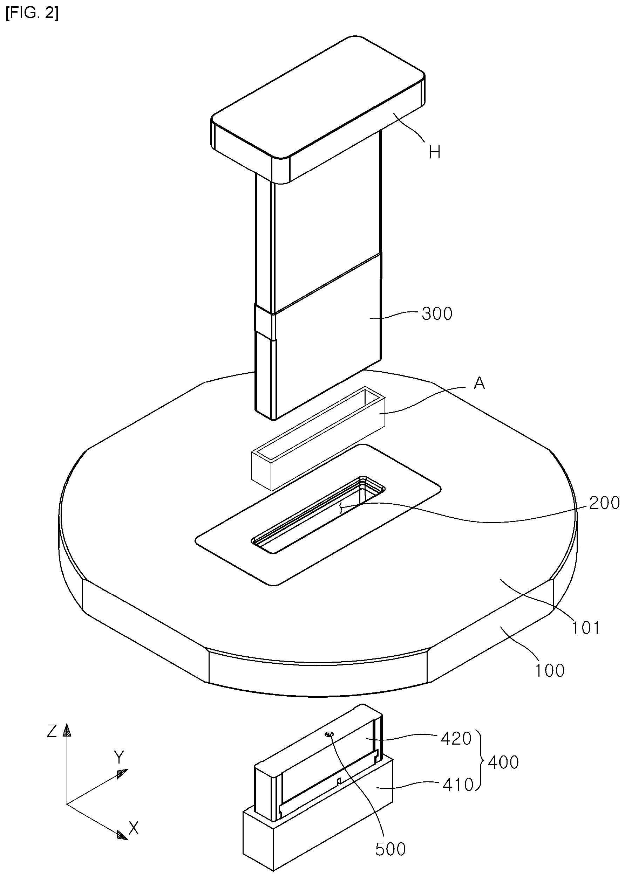

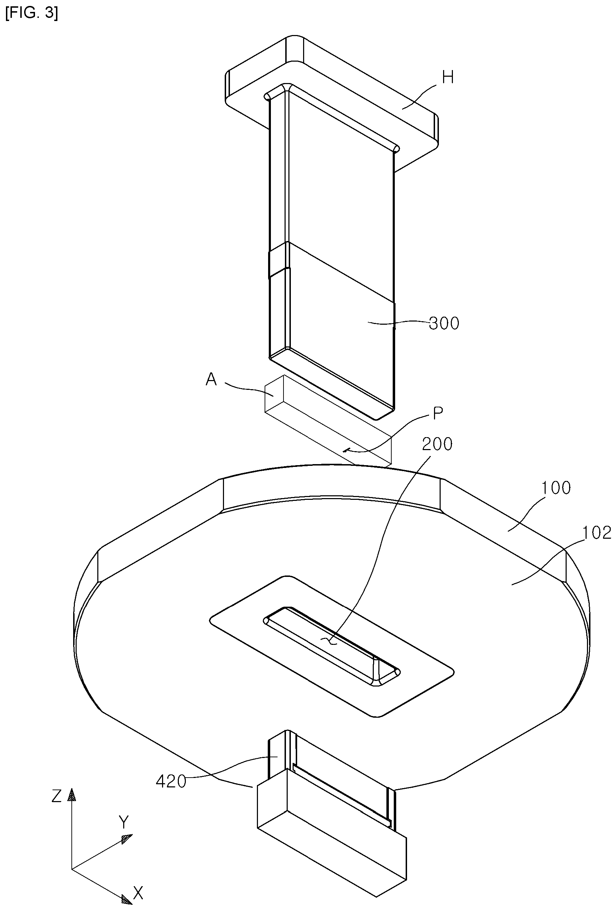

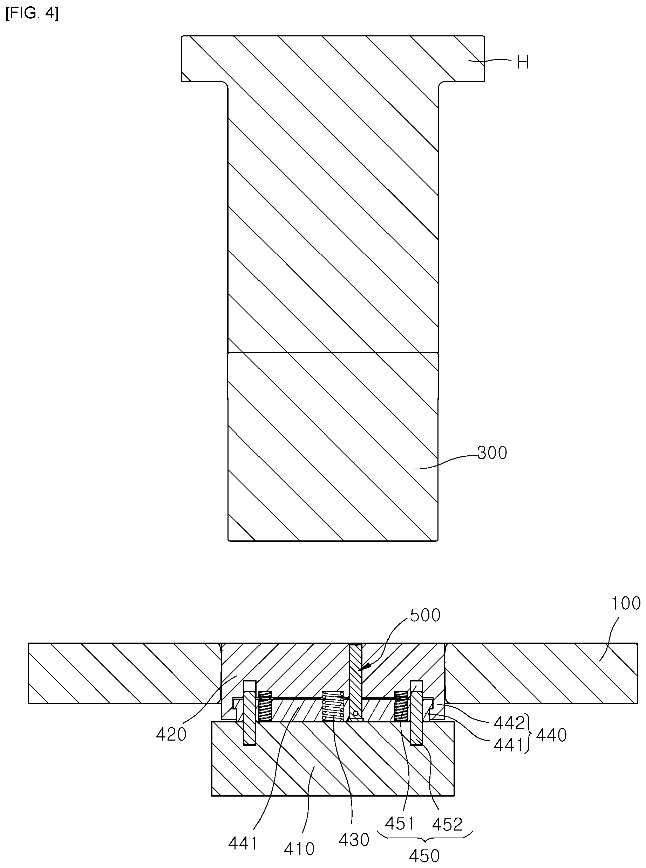

FIG. 1 is a perspective view schematically illustrating a configuration of a secondary battery case manufacturing device according to one embodiment of the present disclosure, FIG. 2 is an exploded perspective view schematically illustrating the configuration of the secondary battery case manufacturing device according to one embodiment of the present disclosure, FIG. 3 is an exploded perspective view illustrating the configuration of the secondary battery case manufacturing device according to one embodiment of the present disclosure from a viewpoint different from FIG. 3, and FIG. 4 is a cross-sectional view schematically illustrating the configuration of the secondary battery case manufacturing device according to one embodiment of the present disclosure.

Referring to FIGS. 1 to 4, the secondary battery case manufacturing device according to the present embodiment includes a die 100, a punch hole 200, a punch 300, a knockout member 400, and a stamp member 500.

The die 100 may have the shape of a plate having a first surface 101 and a second surface 102 that are opposite to each other. The die 100 may be fixed to the ground or a separate structure (not illustrated) by various types of coupling methods such as welding, bolting, and insertion coupling. Hereinafter, the first surface 101 and the second surface 102 of the die 100 will be described as being an upper surface and a lower surface of the die 100 perpendicular to a Z-axis, respectively, based on FIGS. 1 to 3, by way of example.

The punch hole 200 may be formed to have the shape of a hole formed through the first surface 101 and the second surface 102 of the die 100. The punch hole 200 may function as a component for processing a workpiece A into a target shape by plastically deforming the workpiece A together with the punch 300, which will be described below.

Here, the workpiece A may be exemplified as an object to be manufactured into a secondary battery case by the secondary battery case manufacturing device according to the present embodiment. The workpiece A may be provided in a preformed cup shape through an extrusion process. Alternatively, the workpiece A may be provided in the form of a sheet made of a metal material such as aluminum. A target shape of the workpiece A is the shape of the secondary battery case manufactured by the secondary battery case manufacturing device according to the present embodiment, and in addition to a rectangular parallelepiped, the design of the shape may be changed in various ways as long as the workpiece A has the shape of a container with one side open, such as a cylinder. The design of shape and area of a cross-section of the punch hole 200 may be changed in various ways depending on the shape, area, and the like, of the cross section of the secondary battery case formed by processing the workpiece A.

The workpiece A may be transferred on the first surface 101 of the die 100 by a separate transfer device (not illustrated). The workpiece A may be disposed in a position where its bottom surface faces the punch hole 200 prior to the operation of the punch 300, which will be described below.

The punch 300 may be disposed to face the first surface 101 of the die 100. The punch 300 may be installed to be movable with respect to the first surface 101 of the die 100 in the first direction and the second direction. The first direction described below may refer to a direction parallel to the Z-axis and heading from the first surface 101 to the second surface 102 based on FIGS. 1 to 3, and the second direction may refer to a direction opposite to the first direction, that is, a direction parallel to the Z-axis and heading from the second surface 102 to the first surface 101 based on FIGS. 1 to 3.

The punch 300 may be disposed so that a longitudinal direction thereof is parallel to the first direction. The punch 300 may be disposed so that one end of the punch 300, that is, a lower end based on FIGS. 1 to 3, faces the punch hole 200. The other end of the punch 300, that is, an upper end based on FIGS. 1 to 3, may be connected to a separate power device (not illustrated) such as a press, a cylinder, or the like, via a punch holder H. The punch 300 may be reciprocally moved in the first direction and the second direction by a driving force generated from the power device.

As the punch 300 is moved in the first direction, the punch 300 may press the workpiece A toward the punch hole 200 in the first direction. A cross-sectional area of the punch 300 may be formed to be smaller than a cross-sectional area of the punch hole 200. Accordingly, the punch 300 may be inserted into the inside of the punch hole 200 together with the workpiece A and extrude the workpiece A in the first direction or perform an ironing process for reducing the thickness of the workpiece A.

The knockout member 400 may be disposed to face the second surface 102 of the die 100. The knockout member 400 may be installed to be movable with respect to the second surface 102 in the first and second directions. After the punch 300 presses the workpiece A in the first direction, the knockout member 400 may move in the second direction and press the workpiece A in the second direction. That is, the knockout member 400 may function as a component for causing the workpiece A to be separated from the punch hole 200 by applying a pressing force to the workpiece A in a direction opposite to the punch 300 after the workpiece A is formed by the punch 300.

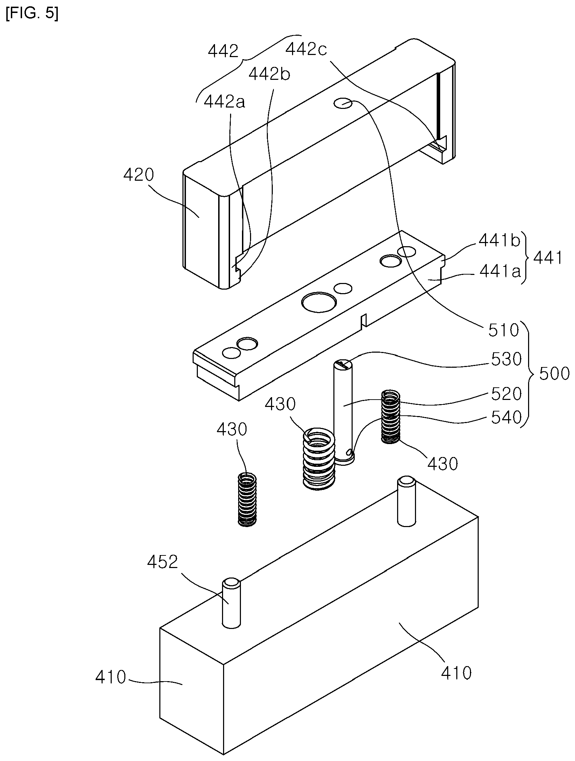

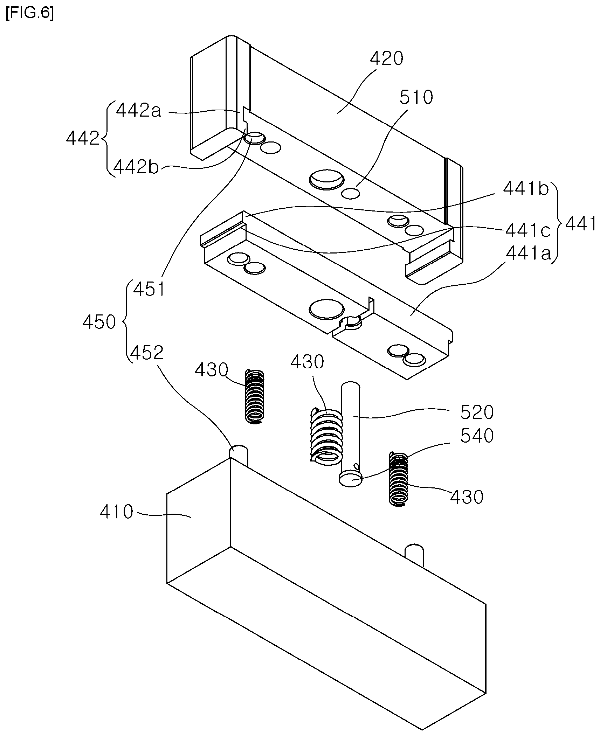

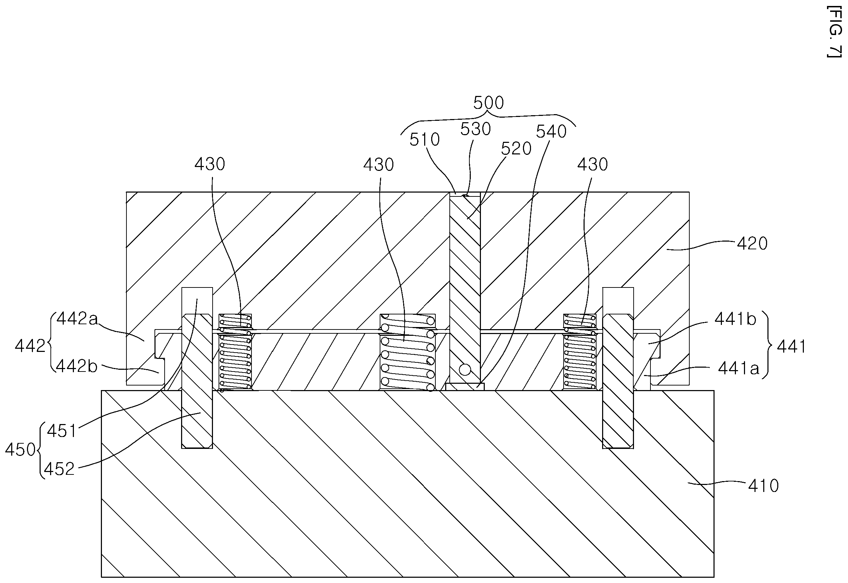

FIG. 5 is an exploded perspective view schematically illustrating a configuration of the knockout member and the stamp member according to one embodiment of the present disclosure, FIG. 6 is an exploded perspective view illustrating the configuration of the knockout member and the stamp member according to one embodiment of the present disclosure from a viewpoint different from FIG. 5, and FIG. 7 is a cross-sectional view schematically illustrating the configuration of the knockout member and the stamp member according to one embodiment of the present disclosure.

Referring to FIGS. 1 to 7, the knockout member 400 may include a knockout body 410 and a knockout pad 420.

The knockout body 410 may form the exterior of one side of the knockout member 400, and may be disposed so that one surface thereof, that is, an upper surface based on FIG. 5, faces the second surface 102 of the die 100. The knockout body 410 may be connected to a separate power device (not illustrated) such as a press or cylinder. The knockout body 410 may be reciprocally moved in the first direction and the second direction by a driving force generated from the power device.

The knockout pad 420 may be disposed to face the punch hole 200 between the knockout body 410 and the second surface 102. When the knockout body 410 is moved in the first direction and the second direction, the knockout pad 420 may be moved in the first direction and the second direction together with the knockout body 410. As the knockout body 410 is moved in the second direction, the knockout pad 420 may come into contact with a bottom surface of the workpiece A inserted into the punch hole 200 by the punch 300 and press the workpiece A in the second direction. The cross-sectional area of the knockout pad 420 may correspond to the cross-sectional area of the punch hole 200, or may be smaller than the cross-sectional area of the punch hole 200. Accordingly, when the knockout body 410 is moved in the second direction, the knockout pad 420 may be inserted into the punch hole 200 in a state of contacting the bottom surface of the workpiece A and cause the workpiece A to be separated from the punch hole 200 in the second direction.

The knockout pad 420 may be installed to be reciprocally movable with respect to the knockout body 410 along the first direction and the second direction. That is, the knockout pad 420 may be installed to be movable relative to the knockout body 410 along the first direction and the second direction, independently of the movement of the knockout body 410. In this case, the knockout pad 420 may be movably connected directly to the knockout body 410, and may also be connected to be movable relative to the knockout body 410 via a separate structure. When the knockout pad 420 comes into contact with the workpiece A, the knockout pad 420 may be moved in the first direction by a reaction force generated between the knockout pad 420 and the workpiece A. Accordingly, the knockout pad 420 may selectively expose the stamp member 500, which will be described below, to an external space.

The knockout member 400 may further include an elastic member 430, a stopper 440, and a guide member 450.

The elastic member 430 may press the knockout pad 420 with respect to the knockout body 410 in the second direction. The elastic member 430 may be provided to be elastically deformable. As one example, the elastic member 430 may have the form of a coil spring capable of expanding and contracting along the longitudinal direction.

The elastic member 430 may be disposed between the knockout body 410 and the knockout pad 420. The elastic member 430 may be disposed so that a longitudinal direction thereof is parallel to the first direction. Both ends thereof may be fixed to the knockout body 410 and the knockout pad 420, respectively. More specifically, both ends of the elastic member 430 may be fixed to surfaces where the knockout body 410 and the knockout pad 420 face each other, respectively, by an adhesive, welding, or the like. Both ends of the elastic member 430 may be inserted into surfaces where the knockout body 410 and the knockout pad 420 face each other, respectively.

When the knockout pad 420 is disposed at an initial position with respect to the knockout body 410, the elastic member 430 may be installed in a compressed state rather than a neutral state. Accordingly, the elastic member 430 may always press the knockout pad 420 with respect to the knockout body 410 in the second direction. Details about an initial position of the knockout body 410 will be described below.

A plurality of elastic members 430 may be provided. The plurality of elastic members 430 may be disposed to be spaced apart from each other between the knockout body 410 and the knockout pad 420. The plurality of elastic members 430 may be disposed parallel to each other.

The stopper 440 may prevent the knockout pad 420 from being separated from the knockout body 410 by an elastic force of the elastic member 430.

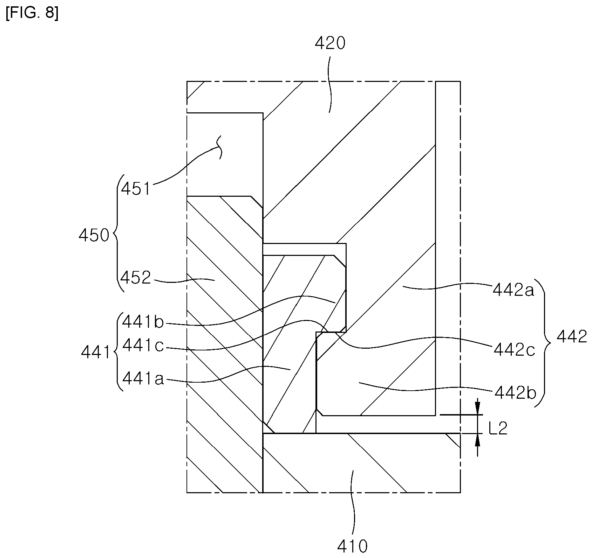

FIG. 8 is an enlarged view schematically illustrating a configuration of the stopper according to one embodiment of the present disclosure.

Referring to FIG. 8, the stopper 440 may include a first stopper 441 and a second stopper 442.

The first stopper 441 forms the exterior of one side of the stopper 440 and may extend from the knockout body 410.

The first stopper 441 may include a first stopper body 441a and a first hook 441b.

The first stopper body 441a may be disposed between the knockout body 410 and the knockout pad 420. One surface of the first stopper body 441a facing the knockout body 410 may be integrally fixed to the knockout body 410. The other surface of the first stopper body 441a facing the knockout pad 420 may come into contact with or may be separated from the knockout pad 420 by the relative movement of the knockout pad 420 with respect to the knockout body 410.

The first hook 441b may extend from the first stopper body 441a along a direction intersecting the first direction. As one example, the first hook 441b may extend from the first stopper body 441a in a direction perpendicular to the first direction, that is, along a direction parallel to a Y-axis direction based on FIG. 2. However, the extension direction of the first hook 441b is not limited thereto, and the design thereof may be changed to various directions within the range of the direction intersecting the first direction, based on FIG. 2.

A first contact surface 441c may be formed on a surface of the first hook 441b facing the knockout body 410. The first contact surface 441c may be disposed parallel to the extension direction of the first hook 441b.

A plurality of first hooks 441b may be provided. The plurality of first hooks 441b may be disposed to be spaced apart from each other along a peripheral surface of the first stopper body 441a. As one example, a pair of first hooks 441b may be provided, and the pair of first hooks 441b may be disposed to be spaced apart by 180 degrees along the peripheral surface of the first stopper body 441a.

The second stopper 442 may extend from the knockout pad 420. The second stopper 442 may come into contact with the first stopper 441 as the knockout pad 420 is moved relative to the knockout body 410 in the second direction. Accordingly, movement of the knockout body 410 in the second direction due to the reaction force generated between the knockout body 410 and the first stoppers 441 may be restricted.

The second stopper 442 may include a second stopper body 442a and a second hook 442b.

The second stopper body 442a may extend from one surface of the knockout pad 420 facing the knockout body 410 toward the knockout body 410. The second stopper body 442a may be disposed so that a longitudinal direction thereof is parallel to the first direction. One end of the second stopper body 442a facing the knockout pad 420 may be integrally fixed to the knockout pad 420. The other surface of the second stopper body 442a facing the knockout body 410 may come into contact with or be separated from the knockout body 410 by the relative movement of the knockout pad 420 with respect to the knockout body 410. A side surface of the second stopper body 442a may be spaced apart from the peripheral surface of the first stopper body 441a along a direction intersecting the first direction. As one example, the second stopper body 442a may be spaced apart from the first stopper body 441a along a direction parallel to the extension direction of the first hook 441b.

A plurality of second stopper bodies 442a may be provided. The number of the plurality of second stopper bodies 442a may be the same as the number of first hooks 441b. Each of the second stopper bodies 442a may be individually disposed at a position facing the first hook 441b.

The second hook 442b may extend from the second stopper body 442a in a direction opposite to the extension direction of the first hook 441b. As one example, the second hook 422b may horizontally extend from an end of the second stopper body 442a facing the knockout body 410 toward a peripheral surface of the knockout body 410. The first hook 441b and the second hook 442b may be sequentially disposed along the first direction.

A second contact surface 442c may be formed on a surface of the second hook 442b facing the first hook 441b. The second contact surface 442c may be disposed parallel to the extension direction of the second hook 442b. Accordingly, the second contact surface 442c may be disposed to face the first contact surface 441c in parallel along a direction parallel to the first direction.

A plurality of second hooks 442b may be provided. The number of the plurality of second hooks 442b may be the same as the number of second stopper bodies 442a. Each of the second hooks 442b may individually extend from a different second stopper body 442a.

As the elastic member 430 presses the knockout pad 420 in the second direction, when no separate external force is applied to the knockout pad 420, the first contact surface 441c and the second contact surface 442c may remain in contact with each other. The initial position of the knockout pad 420 described above may refer to the position of the knockout pad 420 in a state where the first contact surface 441c and the second contact surface 442c are in contact.

The guide member 450 may guide the relative movement of the knockout pad 420 with respect to the knockout body 410.

The guide member 450 may include a guide hole 451 and a guide rod 452.

The guide hole 451 may be formed through any one of the knockout body 410 or the knockout pad 420. Hereinafter, the guide hole 451 will be described as being formed through the knockout pad 420 by way of example. However, the guide hole 451 is not limited thereto, and may also be formed through the knockout body 410.

The guide hole 451 may be formed to have the shape of a hole that is recessed from the surface of the knockout pad 420 facing the knockout body 410. The guide hole 451 may be disposed so that a longitudinal direction thereof is parallel to the first direction. A plurality of guide holes 451 may be provided. The plurality of guide holes 451 may be disposed to be spaced apart from each other in the knockout pad 420 along the direction intersecting the first direction.

The guide rod 452 may extend from the remaining one of the knockout body 410 and the knockout pad 420. As the guide hole 451 is formed in the knockout pad 420, the guide rod 452 may be formed in the knockout body 410. The guide rod 452 may extend from one surface of the knockout body 410 facing the knockout pad 420 toward the knockout pad 420. The guide rod 452 may be disposed so that a longitudinal direction thereof is parallel to the first direction. The guide rod 452 and the guide hole 451 may be coaxially disposed. The guide rod 452 may be inserted into the guide hole 451. In this case, the guide rod 452 may be inserted into the guide hole 451 by passing through the first stopper body 441a. A peripheral surface of the guide rod 452 may slidably come into contact with an inner surface of the guide hole 451. A plurality of guide rods 452 may be provided. Each of the guide rods 452 may be individually inserted into a different guide hole 451.

The stamp member 500 may be installed on the knockout member 400, and as the knockout member 400 comes into contact with the workpiece A, a pattern P may be imprinted on the workpiece A. Accordingly, the stamp member 500 may imprint the pattern P on the workpiece A during the molding process of the workpiece A using the punch 300 so that the production efficiency for the secondary battery case may further improved. Here, the pattern P may be imprinted in an engraved form on the bottom surface of the workpiece A. The pattern P may have various shapes such as letters, symbols, numbers, figures, and the like.

The stamp member 500 may selectively contact the workpiece A according to a direction of the relative movement of the knockout pad 420 with respect to the knockout body 410. More specifically, when the knockout pad 420 is moved in the first direction in a state where the knockout pad 420 is in contact with the workpiece A, the stamp member 500 may protrude out of the knockout pad 420 and come into contact with the workpiece A. When no separate external force is applied to the knockout pad 420 or when the knockout pad 420 is moved in the second direction, the stamp member 500 may be positioned inside the knockout pad 420 and thus not be in contact with the workpiece A. Accordingly, when the knockout pad 420 is inserted into the punch hole 200, damage to the workpiece A due to interference between the stamp member 500 and the workpiece A during the transfer process of the workpiece A may be prevented.

The stamp member 500 may include a stamp hole 510, a stamp rod 520, and a stamp 530.

The stamp hole 510 may be formed through the knockout pad 420. Both ends of the stamp hole 510 may pass through both surfaces of the knockout pad 420 perpendicular to the first direction. The stamp hole 510 may be disposed to face the punch hole 200. More specifically, the stamp hole 510 may be disposed to face a region where the pattern P is formed on the bottom surface of the workpiece A inserted into the punch hole 200. The stamp hole 510 may be disposed so that a longitudinal direction thereof is parallel to the first direction.

The stamp rod 520 may extend from the knockout body 410 toward the stamp hole 510. The stamp rod 520 may have a rod shape extending from one surface of the knockout body 410 facing the knockout pad 420 toward the knockout pad 420. The stamp rod 520 may be disposed so that a longitudinal direction thereof is parallel to the first direction. The stamp rod 520 and the stamp hole 510 may be disposed at positions where their central axes are coaxial. The stamp rod 520 may be inserted into the stamp hole 510. An outer surface of the stamp rod 520 may be spaced apart from an inner surface of the stamp hole 510, or may slidably contact the inner surface of the stamp hole 510.

The stamp 530 may extend from the stamp rod 520, and may be disposed inside the stamp hole 510. More specifically, the stamp 530 may protrude along the second direction from an end surface of the stamp rod 520 disposed to face the punch hole 200. A cross-sectional shape of the stamp 530 may have a shape corresponding to the shape of the pattern P.

When the knockout pad 420 is moved relative to the knockout body 410 in the first direction in the state where the knockout pad 420 is in contact with the workpiece A, the stamp 530 may protrude out of the stamp hole 510 and press the workpiece A in the second direction so that the pattern P is imprinted on the bottom surface of the workpiece A.

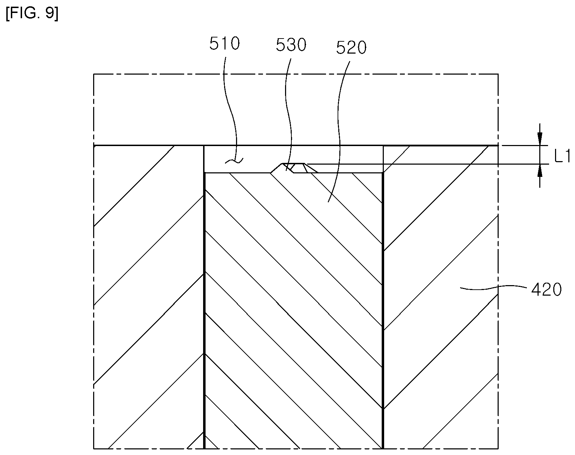

FIG. 9 is an enlarged view schematically illustrating a configuration of the stamp according to one embodiment of the present disclosure.

Referring to FIGS. 8 and 9, as the knockout pad 420 is moved relative to the knockout body 410 from the initial position by a first set distance L1 in the first direction, the stamp 530 may protrude out of the stamp hole 510. The first set distance L2 may be changed to various values in design within a range greater than the distance between an end surface of the stamp 530 and an end surface of the stamp hole 510 facing the punch hole 200. For example, the first set distance may be 0.7 mm. When the knockout pad 420 is moved relative to the knockout body 410 by the first set distance in the first direction in the state where the knockout pad 420 is in contact with the workpiece A, the stamp 530 may press the workpiece A in the second direction so that the pattern P is imprinted on the bottom surface of the workpiece A.

As the knockout pad 420 is moved with respect to the knockout body 410 from the initial position by a second set distance L2 in the first direction, the second stopper 442, that is, the second stopper body 442a, may contact the knockout body 410. The second set distance L2 may be greater than the first set distance L1. As one example, the second set distance L2 may be 1 mm. Accordingly, when the knockout pad 420 is moved in the first direction, the second stopper 442 may delay a point in time at which the second stopper body 442a contacts the knockout body 410 from a point in time at which the stamp 530 protrudes out of the stamp hole 610, so that the issue that the stamp 530 does not protrude out of the stamp hole 510 may be prevented.

The stamp member 500 may further include a support member 540.

The support member 540 may be disposed between the knockout body 410 and the stamp rod 520. Both sides of the support member 540 may be connected to the knockout body 410 and the stamp rod 520, respectively, to support the stamp rod 520 with respect to the knockout body 410. The support member 540 may be provided to be elastically deformable. As one example, the support member 540 may be made of an elastically deformable material such as urethane, silicone, or rubber. Accordingly, the support member 540 may prevent damage to the stamp 530 by distributing a load applied to the stamp 530 through its own elastic deformation. An elastic deformation length of the support member 540 may be smaller than the difference between the second set distance L2 and the first set distance L1. As one example, the elastic deformation length of the support member 540 may be 0.2 mm.

Hereinafter, operations of the secondary battery case manufacturing device according to one embodiment of the present disclosure will be described.

Hereinafter, the secondary battery case manufacturing device will be described as ironing a workpiece A preformed into a cup shape in an extrusion process by way of example. However, the operations described below may be equally applied to the case of performing extrusion processing on a sheet-shaped workpiece A in the secondary battery case manufacturing device.

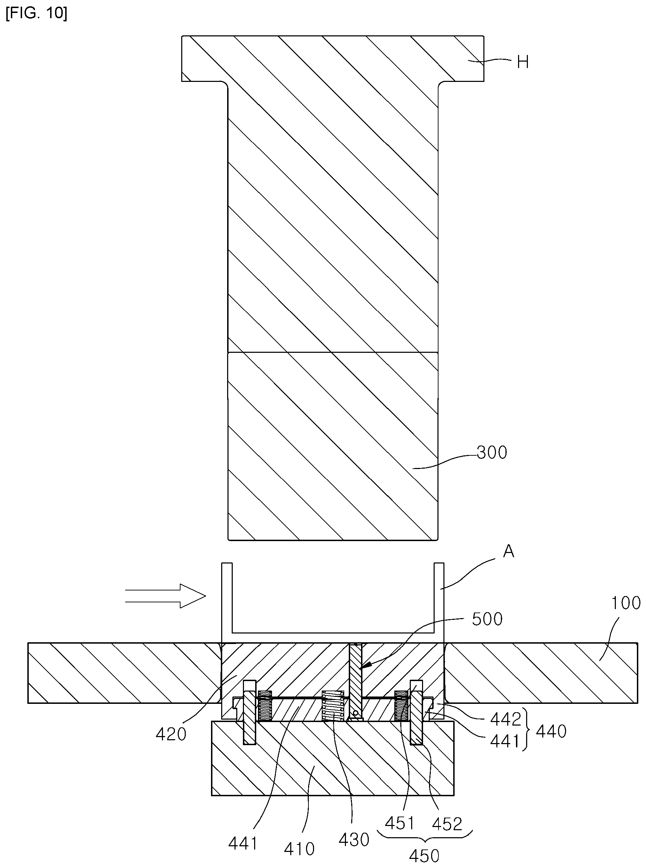

FIGS. 10 to 15 are views schematically illustrating an operation process of a secondary battery case manufacturing device according to one embodiment of the present disclosure.

Referring to FIG. 10, the punch 300 is separated from the punch hole 200 and in a state where the knockout pad 420 is inserted into the punch hole 200, the workpiece A is transferred to a position facing the punch hole 200.

In this case, as the knockout pad 420 is positioned at the initial position by the elastic force of the elastic member 430, the stamp 530 does not protrude out of the stamp hole 510. Accordingly, damage to the workpiece A due to a collision with the stamp 530 during the transfer process may be prevented.

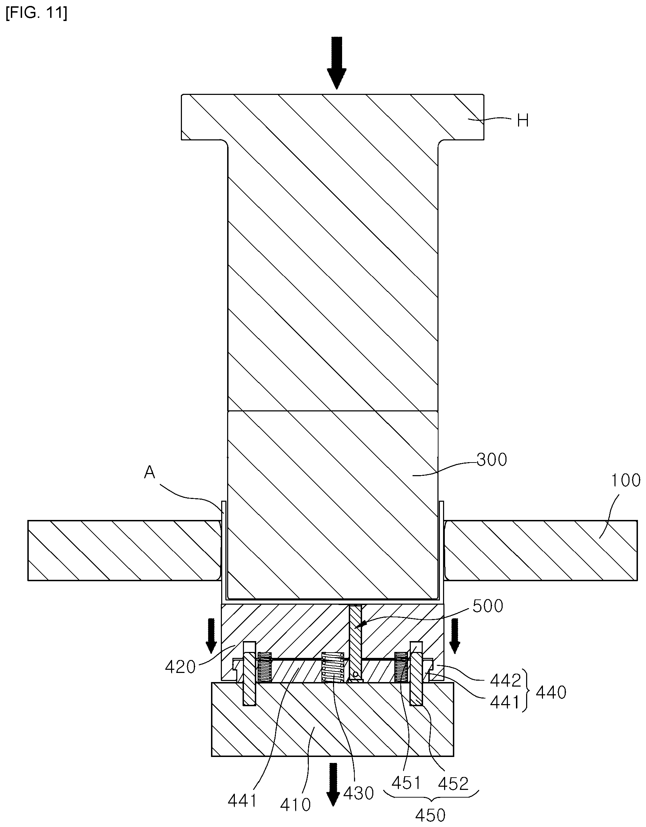

Referring to FIG. 11, the punch 300 is moved in the first direction and presses the workpiece A toward the punch hole 200 in the first direction.

The workpiece A is inserted into the punch hole 200 by a pressing force applied from the punch 300.

In this process, as the punch 300 is inserted into the inside of the punch hole 200 together with the workpiece A, the thickness of the workpiece A is reduced as much as a distance between the punch 300 and the punch hole 200.

The knockout member 400 is moved in the first direction as much as a distance moved by the punch 300 in a state where the knockout pad 420 is in contact with the bottom surface of the workpiece A.

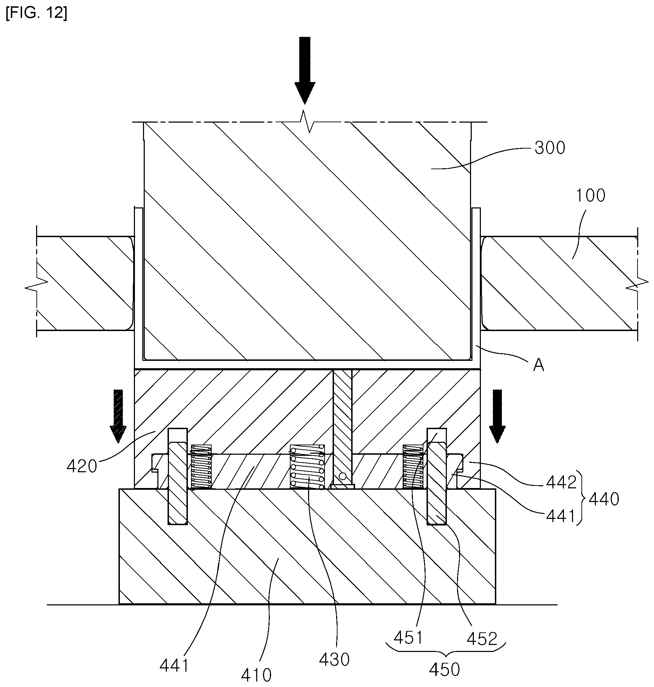

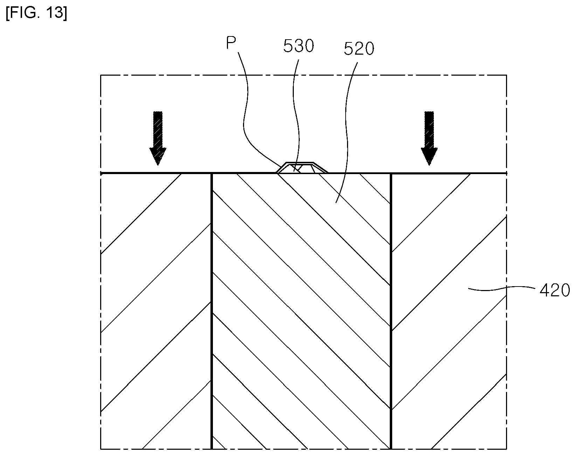

Referring to FIGS. 12 and 13, when the magnitude of the pressing force applied from the punch 300 to the workpiece A exceeds the elastic force of the elastic member 330, the knockout pad 420 is moved relative to the knockout body 410 along the first direction.

As the knockout pad 420 is moved more than the first set distance L1 in the first direction, the stamp 530 protrudes out of the stamp hole 510 and presses the bottom surface of the workpiece A in the second direction.

Accordingly, the pattern P may be imprinted in the shape of the stamp 530 on the bottom surface of the workpiece A by the pressing force applied from the stamp 530.

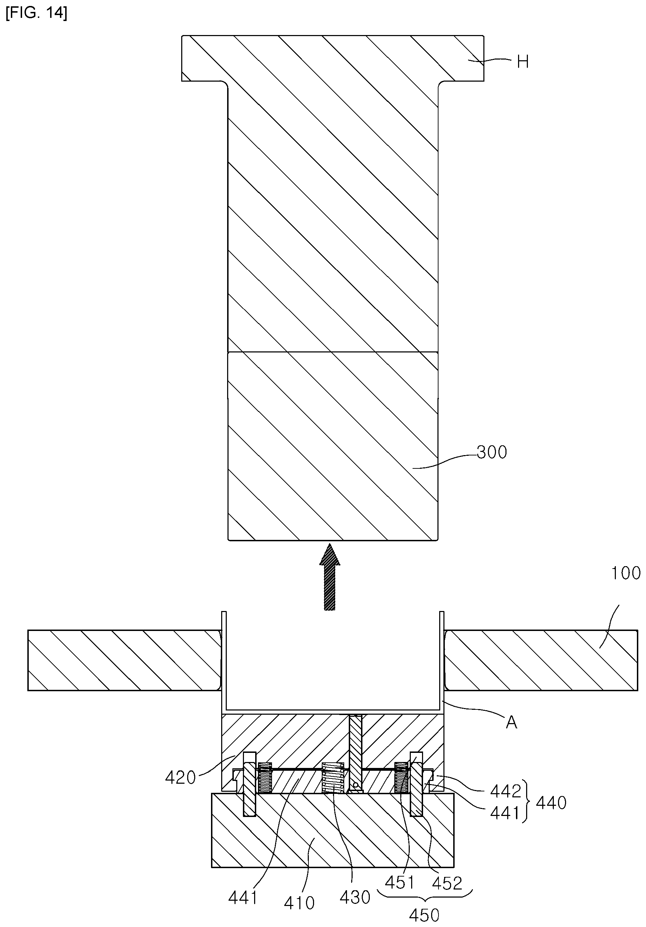

Referring to FIG. 14, after the forming of the workpiece A is completed, the punch 300 is moved along the second direction and is separated from the workpiece A.

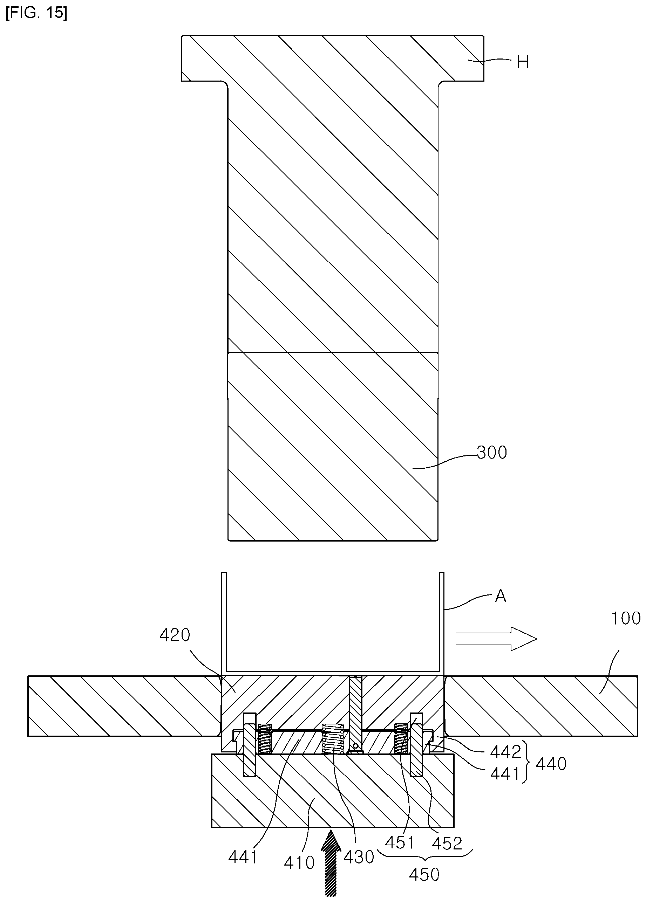

Referring to FIG. 15, after the punch 300 is separated from the workpiece A, the knockout member 400 is moved in the second direction and presses the workpiece A in the second direction.

The workpiece A is moved along the second direction by the pressing force applied from the knockout member 400 and separated from the punch hole 200.

In this process, when the magnitude of the pressing force applied by the knockout member 400 to the workpiece A exceeds the elastic force of the elastic member 330, the stamp 530 may imprint the pattern on the bottom surface of the workpiece A by performing the same operations as described in FIGS. 12 and 13.

While the present disclosure has been described with reference to embodiments shown in the drawings, these embodiments are merely illustrative and it should be understood that various modifications and equivalent other embodiments can be derived by those skilled in the art on the basis of the embodiments.

## Claims

1. A secondary battery case manufacturing device comprising:
a die having a first surface and a second surface that are opposite to each other;
a punch hole formed through the first surface and the second surface;
a punch disposed to face the first surface and configured to press a workpiece toward the punch hole in a first direction;
a knockout member disposed to face the second surface and configured to press the workpiece in a second direction opposite to the first direction; and
a stamp member installed on the knockout member and configured to imprint a pattern on the workpiece as the knockout member comes into contact with the workpiece.

2. The secondary battery case manufacturing device of claim 1, wherein the knockout member includes:
a knockout body disposed to face the second surface and configured to move along the first direction or the second direction; and
a knockout pad installed to be reciprocally movable with respect to the knockout body along the first direction and the second direction and configured to contact the workpiece, and
the stamp member selectively contacts the workpiece according to the moving direction of the knockout pad.

3. The secondary battery case manufacturing device of claim 2, wherein the knockout pad is inserted into the punch hole as the knockout body is moved along the second direction.

4. The secondary battery case manufacturing device of claim 2, wherein the stamp member includes:
a stamp hole formed through the knockout pad and disposed to face the punch hole;
a stamp rod extending from the knockout body toward the stamp hole; and
a stamp extending from the stamp rod and disposed inside the stamp hole, and
the stamp protrudes out of the stamp hole as the knockout pad is moved relative to the knockout body in the first direction.

5. The secondary battery case manufacturing device of claim 4, wherein the stamp extends along the second direction from an end of the stamp rod.

6. The secondary battery case manufacturing device of claim 4, wherein the stamp member further includes a support member disposed between the knockout body and the stamp rod and configured to support the stamp rod with respect to the knockout body.

7. The secondary battery case manufacturing device of claim 6, wherein the support member is provided to be elastically deformable.

8. The secondary battery case manufacturing device of claim 4, wherein the knockout member further includes:
an elastic member configured to press the knockout pad in the second direction; and
a stopper configured to prevent the knockout pad from being separated from the knockout body.

9. The secondary battery case manufacturing device of claim 8, wherein the elastic member is a coil spring.

10. The secondary battery case manufacturing device of claim 8, wherein the elastic member is disposed between the knockout body and the knockout pad.

11. The secondary battery case manufacturing device of claim 10, wherein the elastic member is disposed so that a longitudinal direction thereof is parallel to the first direction, and both ends thereof are fixed to the knockout body and the knockout pad, respectively.

12. The secondary battery case manufacturing device of claim 8, wherein the stopper includes:
a first stopper extending from the knockout body; and
a second stopper extending from the knockout pad and contacting the first stopper as the knockout pad is moved relative to the knockout body in the second direction.

13. The secondary battery case manufacturing device of claim 12, wherein the first stopper includes:
a first stopper body fixed to the knockout body; and
a first hook extending from the first stopper body along a direction intersecting the first direction and having a first contact surface,
the second stopper includes:
a second stopper body fixed to the knockout pad; and
a second hook extending from the second stopper body in a direction opposite to the extension direction of the first hook and having a second contact surface disposed to face the first hook, and
the first hook and the second hook are sequentially disposed along the first direction.

14. The secondary battery case manufacturing device of claim 13, wherein the first contact surface and the second contact surface are disposed in parallel.

15. The secondary battery case manufacturing device of claim 12, wherein the stamp protrudes out of the stamp hole as the knockout pad is moved with respect to the knockout body from an initial position by a first set distance in the first direction.

16. The secondary battery case manufacturing device of claim 15, wherein the second stopper contacts the knockout body as the knockout pad is moved with respect to the knockout body from the initial position by a second set distance greater than the first set distance in the first direction.

17. The secondary battery case manufacturing device of any one of claims 4 to 16, wherein the knockout member further includes a guide member configured to guide the relative movement of the knockout pad with respect to the knockout body.

18. The secondary battery case manufacturing device of claim 17, wherein the guide member includes:
a guide hole formed through any one of the knockout body and the knockout pad; and
a guide rod extending from the other one of the knockout body and the knockout pad and inserted into the guide hole.

19. The secondary battery case manufacturing device of claim 18, wherein the guide hole and the guide rod are disposed parallel to the first direction.
